# EUROPÄISCHE PATENTSCHRIFT

(11) **EP 3 738 544 B1**
(45) Veröffentlichungstag und Bekanntmachung des Hinweises auf die Patenterteilung: **18.10.2023**
(21) Anmeldenummer: 20163563.8
(22) Anmeldetag: 05.05.2011
(51) Int. Cl.: A61C 8/00

(54) **DENTALIMPLANTAT**
DENTAL IMPLANT
IMPLANT DENTAIRE

(30) Priorität: 05.05.2010 DE 102010019582; 05.05.2010 DE 102010019583
(43) Veröffentlichungstag der Anmeldung: 18.11.2020
(62) Teilanmeldung aus: 16191828.9
(73) Patentinhaber: Nobel Biocare Services AG, 8302 Kloten (CH)
(72) Erfinder: ZIPPRICH, Holger, 64342 Malchen (DE)
(74) Vertreter: Tergau & Walkenhorst Patentanwälte PartGmbB

(56) Entgegenhaltungen:
- WO-A1-98/46162
- WO-A2-2009/121500
- US-A1- 2004 209 226
- US-A1- 2008 261 176

## Beschreibung

Die Erfindung bezieht sich auf ein zur Einbringung in einen Kieferknochen vorgesehenes Implantat-Teil oder Dentalimplantat, insbesondere vorgesehen zur Kombination mit einem zugeordneten, zur Anbringung eines Zahnersatzstücks vorgesehenen zweiten Implantat-Teil, mit einem Aufnahmekanal oder einer Formausnehmung, in die zur mechanischen Verbindung mit dem zweiten Implantat-Teil ein an dieses angeformter Verbindungszapfen oder Kontaktstift einschiebbar ist.

Derartige, so genannte zwei- oder mehrteilige Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das erste, in der Regel auch als Pfostenteil bezeichnete Implantat-Teil üblicherweise durch Einschrauben an der vorgesehen Stelle in den Kieferknochen eingesetzt wird. Das Pfostenteil weist dabei in der Regel am apikalen Ende ein zumeist selbstschneidendes Schraubengewinde auf, mit welchem das Pfostenteil in das entsprechend präparierte Implantatbett eingesetzt wird.

Ein derartiges Dentalimplantat ist üblicherweise grundsätzlich zweiteilig aufgebaut und umfasst das zur Einbringung in den Kieferknochen vorgesehene Pfostenteil und ein zugeordnetes Aufbauteil, an das das als Prothese oder dergleichen vorgesehene Zahnersatzstück anbringbar ist. Das Pfostenteil und ebenso das Kopf- oder Aufbauteil bestehen üblicherweise aus Metall oder einer Keramik, und zwar insbesondere aus Titan, einer Titanlegierung, einer titanhaltigen Legierung, einer Zirkonoxid-Aluminiumoxid-Keramik oder einer Keramik, die entweder Zirkonoxid oder Aluminiumoxid beinhaltet. Das Pfostenteil ist an seiner Außenseite üblicherweise mit einem Gewinde versehen, welches als selbstschneidendes oder auch als nicht selbstschneidendes Gewinde ausgeführt sein kann.

Das Pfostenteil wird üblicherweise in einem entsprechend aufbereiteten Implantatbett des Kieferknochens verankert. Die Konstruktion des im Außenbereich des Pfostenteils vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

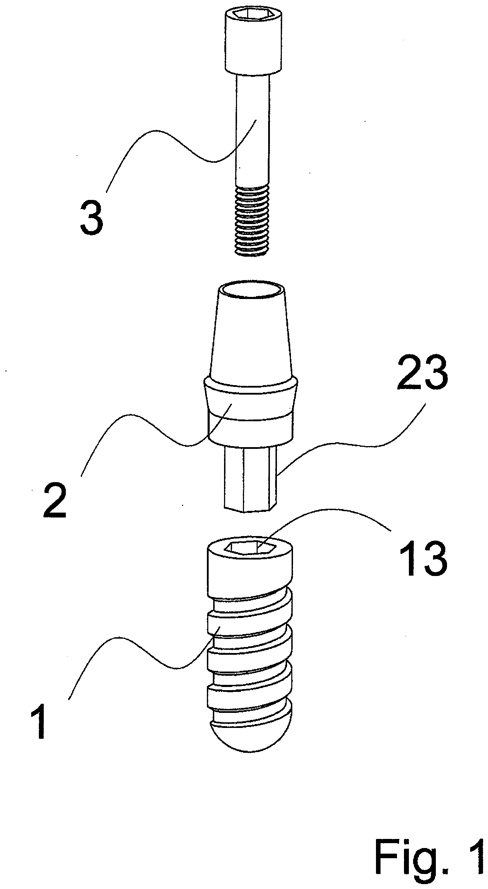

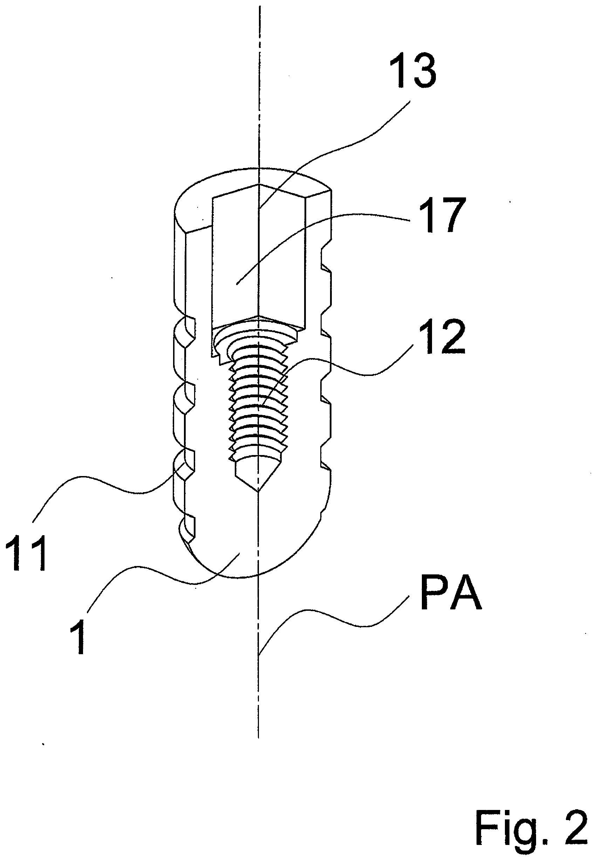

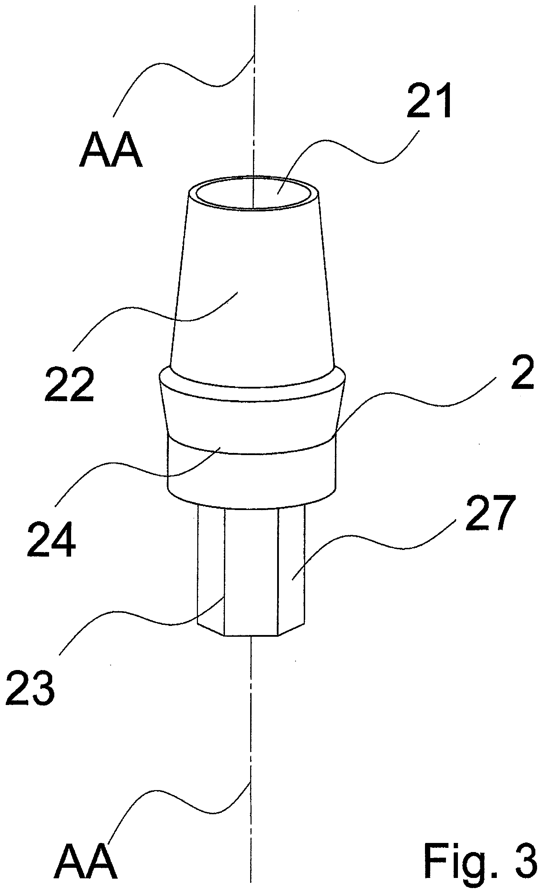

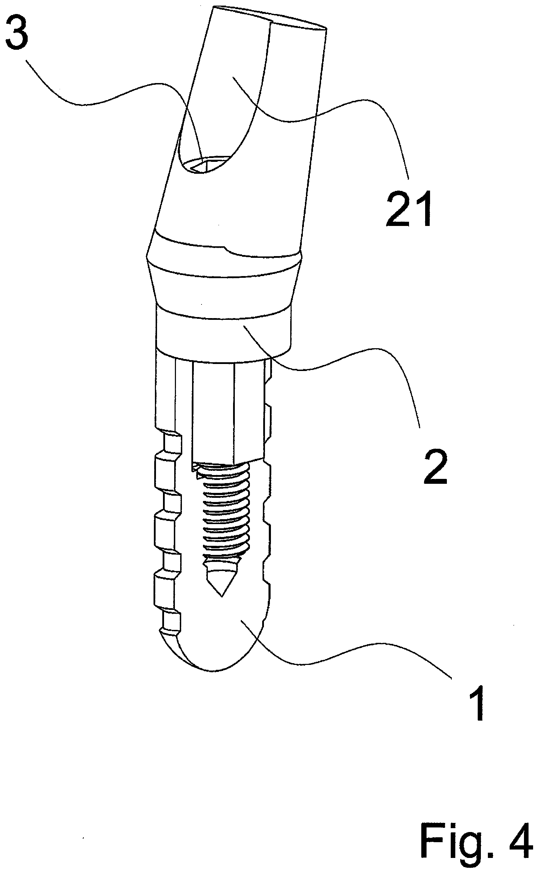

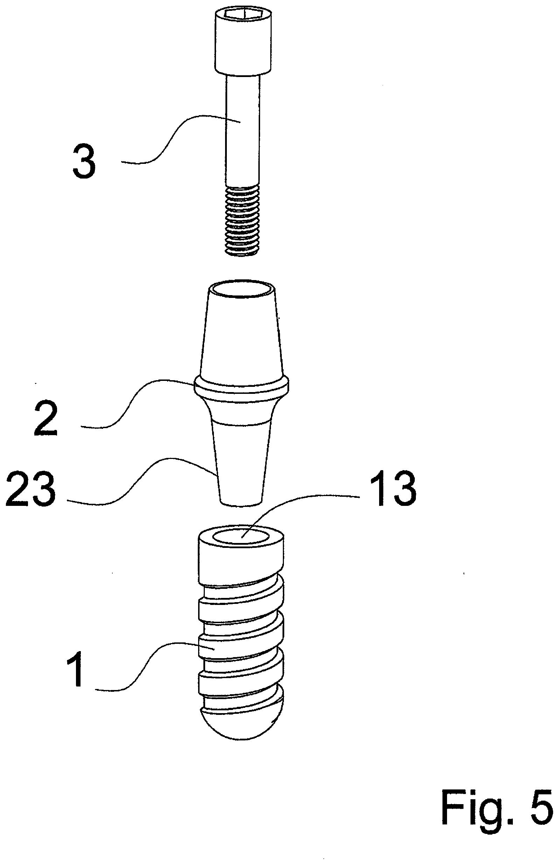

FIGs 1 und 2 zeigen je ein Dentalimplantat (Pfostenteil) mit einem dazugehörigen Aufbauteil und einer Verbindungsschraube. In dem Pfostenteil 1 ist eine Formausnehmung 13 eingebracht, welche exakt auf den an das Aufbauteil 2 angeformten Kontaktstift 23 abgestimmt ist. Die Formausnehmung 13 im Pfostenteil 1 bildet im eingegliederten Zustand mit dem an das Aufbauteil 2 angeformten Kontaktstift 23 ein Gesperre gegenüber allen Kräften und Momenten außer gegenüber einer Kraft, welche beide Teile voneinander weg bewegt. Um eine ungewollte Trennung der beiden Bauteile aufgrund einer derartigen Kraft zu vermeiden, wird die Verbindungsschraube 3 (vgl. FIG. 4) mit dem entsprechenden Anzugsmoment montiert.

Dentale Implantate (Pfostenteile) haben üblicherweise äußerlich ein Gewinde (siehe FIGs. 1 und 2). Grund hierfür ist, dass Pfostenteile meistens in den Kieferknochen eingeschraubt werden. Das Einschrauben der Pfostenteile erfolgt entweder über ein für diesen Zweck vormontiertes Aufbauteil (Eindrehaufbauteil) oder ein Instrument, welches direkt in das Pfostenteil eingreift. Das bedeutet, dass die Pfostenteile in ihrer Verpackung entweder mit oder ohne ein vormontiertes Eindrehaufbauteil gelagert sind. Der Eindrehvorgang selbst erfolgt entweder manuell oder über eine Maschine, welche das benötigte Drehmoment und die gewünschte Drehzahl bereitstellt. Zur Übertragung des Drehmomentes vom Eindrehinstrument oder dem Eindreh-Aufbauteil auf das Pfostenteil wird meist ein Gehemme und oder ein Gesperre zwischen den Bauteilen genutzt. Bei der Verwendung eines Gesperres wird das Gesperre auch später als Indizierung verwendet. Dies hat den Vorteil, dass ein und dasselbe geometrische Teil, hier ein Gesperre, für mehrere Anwendungen verwendet werden kann.

US 2008/261176 A1 und WO 2009/121500 A2 offenbaren jeweils ein zahnärztliches Implantat mit Abutment, wobei das Abutment ein Verbindungszapfen aufweist, der in einen im Implantat vorgesehenen Aufnahmekanal einschiebbar ist, wobei der Verbindungszapfen Rotationsgesperre aufweist. US 2008/261176 A1 kann als nächstliegender Stand der Technik zu den vorliegenden Ansprüchen betrachtet werden.

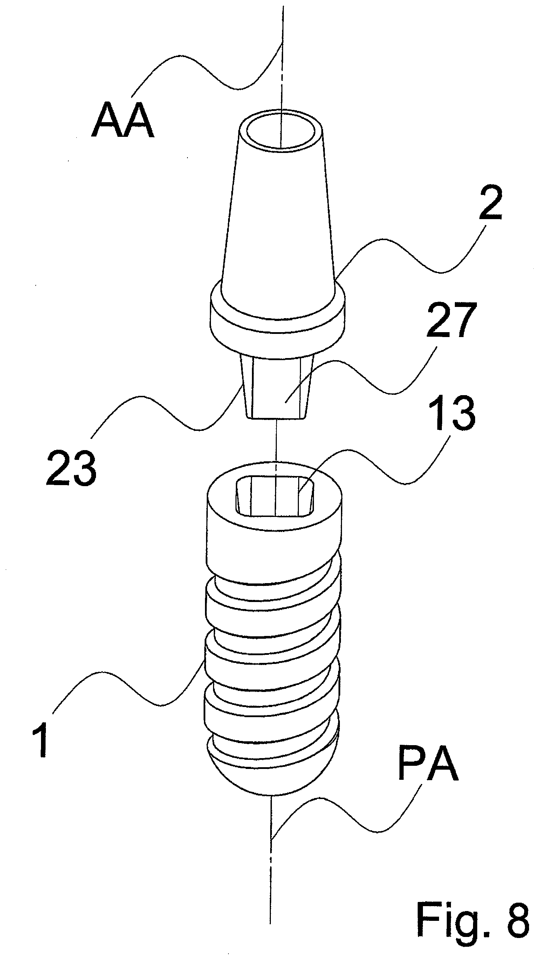

KR-A-10 2007 009 060 beschreibt und FIG. 8 zeigt eine Konusverbindung wobei die Querschnittsfläche nicht rund ist, sondern ein Quadrat mit abgerundeten Ecken aufweist. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

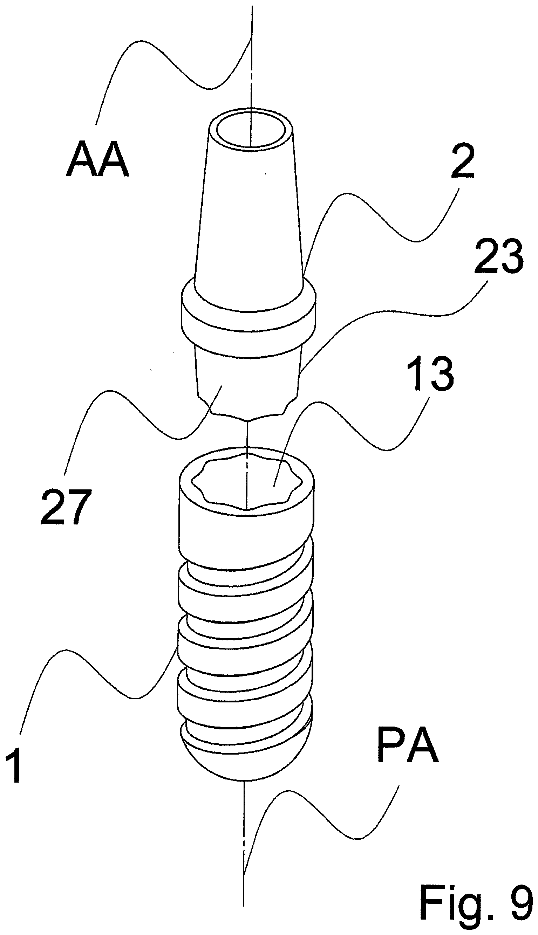

US-A-2005 186 537 beschreibt und FIG. 9 zeigt eine Konusverbindung, wobei die Querschnittsfläche nicht rund ist sondern konkave und konvexe Anteile beinhaltet. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

Diese konischen Anteile des Rotationsgesperres bzw. diese konischen Rotationsgesperre sind streng genommen keine reinen Rotationsgesperre mehr. Ursache hierfür ist die Gegebenheit, dass bei der Übertragung eines Momentes welches an dem Aufbauteil anliegt und um dessen Achse gerichtet ist, an das Pfostenteil kein reines Moment weiterleitet. Zwischen dem Aufbauteil und dem Pfostenteil wirken ein Drehmoment und eine Kraft, welche so gerichtet ist dass sich das Aufbauteil und das Pfostenteil voneinander absto-ßen. Die Höhe dieser Kraft ist abhängig von der Geometrie der Verbindung und den Haft- und Gleitreibungseigenschaften der Verbindungspartner an den gegenseitigen Kontaktstellen. Befindet sich die Verbindung zwischen dem Pfostenteil und dem Aufbauteil im endgültig montierten Zustand, also mit montierter Verbindungsschraube wirkt sich dieser Effekt in Abhängigkeit der geometrischen Gestaltung kaum aus. Je geringer der Konuswinkel und je höher die Haft- und Gleitreibung umso geringer die Kraft welche die Bauteile auseinanderdrückt. Je größer der Konuswinkel und je geringer die Haft- und Gleitreibung desto größer der Anteil der der Kraft welche die Bauteile auseinanderdrückt.

Diese Abstoßung hat bezogen auf den praktischen Einsatz von Dentalimplantaten verschiedene Einflüsse. Die Insertion eines Pfostenteils in den Knochen erfolgt über eine Rotation weil die Außengeometrie der Pfostenteile üblicherweise ein Gewinde aufweist über welches das Pfostenteil im Knochen verankert wird. Das Eindrehen des Pfostenteils erfolgt über ein Eindrehwerkzeug. Dieses Werkzeug greift entweder direkt in das Rotationsgesperre/die Indizierung zu Übertragung des nötigen Drehmomentes oder über einen auf dem Pfostenteil vormontierten Eindrehaufbauteil. Dieses Eindrehaufbauteil ist meist mittels einer Verbindungsschraube auf dem Pfostenteil befestigt und nutzt die Indizierung als Rotationsgesperre zur Übertragung des zum Eindrehen nötigen Drehmomentes. In Richtung des Eindrehwerkzeuges befindet sich meist ein weiteres Rotationsgesperre.

Handelt es sich bei der Verbindung zwischen dem Pfostenteil und dem Aufbauteil eines Dentalimplantat um ein Rotationsgesperre mit konischen Anteilen kann mit Hilfe eines mittels einer Verbindungsschraube vormontierten Eindrehaufbauteils mit einer problemlosen Insertion des Pfostenteils gerechnet werden. Da diese Eindrehaufbauteile und die dazugehörigen Verbindungsschrauben nach der Insertion des Pfostenteils im Knochen demontiert werden und anschließend nicht weiter verwendbar sind kommt es zu zusätzlichen Kosten und überflüssigen Demontagen. Kann mit dem Eindrehwerkzeug direkt in das Pfostenteil eingegriffen werden, können Kosten für den Patienten und Arbeiten an dem Patienten entfallen. Dies stellt einen enormen Vorteil dar, ist aber mit einer Verbindung, welche in der Indizierung konische bzw. geneigte Funktionselemente besitzt schwierig. Je größer die Haft- und die Gleitreibung zwischen den Kontaktflächen von Aufbauteil und Pfostenteil, desto niedriger die abstoßende Kraft und desto niedriger die Gefahr der Komplikation bei dem Eindrehen des Postenteils in den Knochen mit der Verwendung eines direkt in das Pfostenteil eingreifenden Eindrehwerkzeuges welches über eine konische Indizierung eingreift.

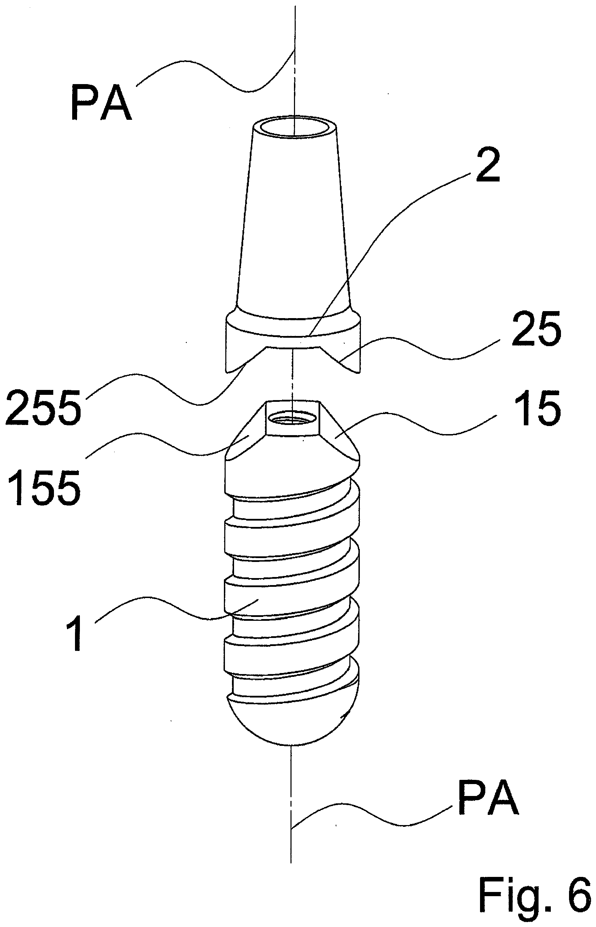

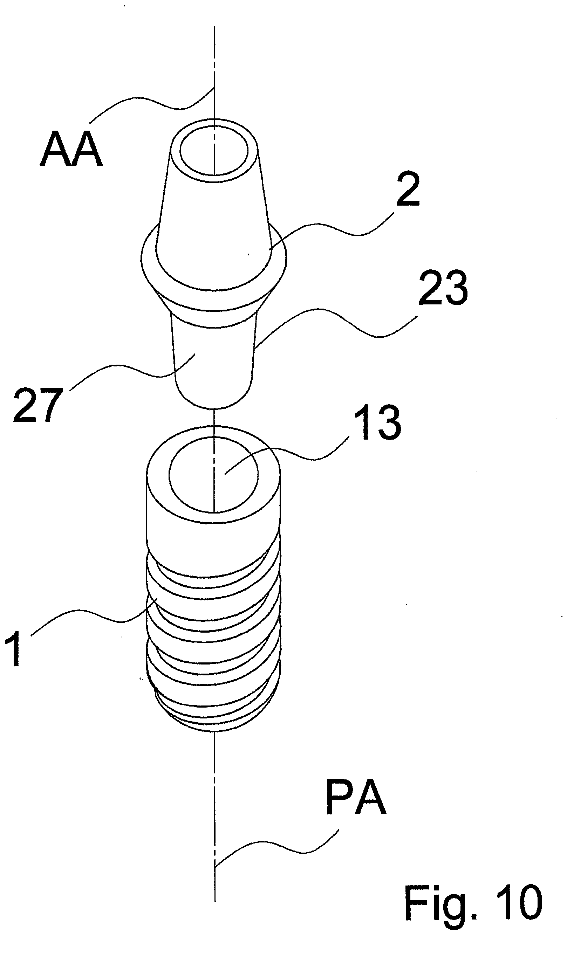

Die Gestaltung der Verbindung zwischen dem Aufbauteil und dem Pfostenteil eines Dentalimplantates wie sie in FIG. 6 bis FIG. 10 dargestellt sind, weisen allerdings auch deutliche Vorteile auf. Bei der Montage von einem Aufbauteil in einem Pfostenteil mit einer rein parallelwandigen Indizierung (Rotationsgesperre ohne konische Funktionsgeometrien und bei der Übertragung von Momenten um deren Achse reine Momentweiterleitung ohne entstehen einer abstoßenden Kraft) muss vor der translatorischen Eingliederung die exakte Position zwischen dem Aufbauteil und dem Pfostenteil gegeben sein. Bei Verbindungen wie sie auf den FIGs. 6 bis 10 dargestellt sind kann der Umwandlungseffekt von einem reinen Moment in die Übereinanderlagerung eines Moments und einer Kraft auch umgekehrt genutzt werden. Beim eingliedern des Aufbauteils in das Pfostenteil ist es nicht notwendig das die Indizierung zwischen dem Aufbauteil und dem Pfostenteil exakt zueinander ausgerichtet sind. Stimmt die Position nicht exakt überein kann aus der aufeinander zu Bewegung (rein translatorisch) eine überlagerte Rotation erzwungen werden. Treten die Flächen der Indizierung von Aufbauteil und Pfostenteil zueinander in Kontakt und sind aber rotatorisch nicht zueinander Ausgerichtet wird die translatorische Bewegung in einer translatorische und eine rotatorische Bewegung umgewandelt. Folglich kommt es beim Fügen zu einer rotatorischen Ausrichtung bzw. einer rotatorischen Selbstzentrierung des Aufbauteils im Pfostenteil. Dieser Effekt vereinfacht die Findung der Indizierung und somit die Eingliederung des Aufbauteils in oder auf dem Pfostenteil. Wichtig ist bei der rotatorischen Selbstzentrierung, dass das Aufbauteil nicht an der Rotation behindert wird. Soll die rotatorische Selbstzentrierung mit dem Eindrehen der Verbindungsschraube genutzt werden besteht die Möglichkeit dass das Aufbauteil für die Endposition selbstständig rechtsdrehend oder selbstständig linksdrehend zentriert werden muss. Erfolgt die selbstständige Zentrierung in Drehrichtung der Schraube unterstützt diese den selbst zentrierenden Effekt. Erfolgt die selbstständige Zentrierung entgegen der Drehrichtung der Schraube wirkt diese dem selbst zentrierenden Effekt entgegen. Auch die Dimensionierung von Konuswinkel, Materialpaarung von Aufbauteil und Pfostenteil und die Oberflächenbeschaffenheit nehmen einen großen Einfluss auf die Güte der Selbstzentrierung. Es ist besonders vorteilhaft wenn die Haft- und die Gleitreibung zwischen den Kontaktflächen der konischen Indizierung zwischen dem Aufbauteil und dem Pfostenteil möglichst niedrig sind.

Versuche bei konisch selbst zentrierenden Indizierungen haben gezeigt, dass je niedriger der Konuswinkel ist, desto größer die Möglichkeit einer konischen Selbsthemmung zwischen dem Aufbauteil und dem Pfostenteil. Diese Selbsthemmung ist zwar erwünscht aber erst in der Endposition des Aufbauteils im oder auf dem Pfostenteil. Kommt es vor der rotatorischen Endposition zu einer Hemmung zwischen den beiden Bauteilen, z. B. durch die Tatsache, dass sich das Aufbauteil entgegen der Drehrichtung der Verbindungsschraube selbst zentrieren müsste, wird die mit der Selbstzentrierung gewünschte Vereinfachung nicht erreicht. Es zeigte sich zwar dass im Gegensatz zu herkömmlichen Indizierungen die fehlerhaft montiert wurden, sich die Hemmung durch ein Wackeln am Aufbauteil löst, somit schnell bemerkt wird und das sich anschließend das Aufbauteil weiter zentriert, jedoch ist dies noch nicht zufrieden stellend ausgeführt.

Verbindungen wie sie auf den FIGs. 6 bis 10 dargestellt sind besitzen eine rotatorische Selbstzentrierung. Das bedeutet, dass bei dem Eingliedern bzw. Fügen bzw. Aufeinandersetzen von Aufbauteil und Pfostenteil, zwar nicht in allen rotatorischen Positionen, aber häufig axialkraftunterstützt eine rotatorische Bewegung erzwungen wird bzw. ein Drehmoment hervorgerufen wird. Hierbei hat, ähnlich wie bei diversen Getrieben eine rein translatorische Bewegung eine rotatorische Bewegung zur Folge. Dies wird im Folgenden als rotatorische Selbstzentrierung bezeichnet. Im Umgekehrten Fall ist es allerdings so, dass im Montierten Zustand ein Drehmoment welches auf die montierten Bauteile wirkt auch eine Axialkraft zur Folge hat. Die rotatorische Selbstzentrierung vereinfacht das Eingliedern eines Aufbauteils in ein Pfostenteil sehr. Diese Vereinfachung kann von dem Zahntechniker bei dem Eingliedern des Aufbauteils in das im Gipsmodel (Positivsituation des Patientenmundes) integrierte Pfostenteilanalog bei der Herstellung des individuellen Zahnersatzes genutzt werden. Eine weitere Vereinfachung entsteht bei der Eingliederung des Aufbauteils im Pfostenteil des Patientenmundes.

Die Ausführung und Gestaltung der Verbindungsparameter (z. B. Dachwinkel, Konuswinkel, Exzentrizität bei ovalen Konusverbindungen, Durchmesserunterschiede, lokale Maxima und lokale Minima, etc.) hat einen großen Einfluss auf die Qualität der Selbstzentrierung. Über diese Parameter lassen sich die Übersetzungsverhältnisse der Umwandlung von einer translatorischen in eine rotatorische oder umgekehrte Bewegung einstellen bzw. definieren. Wie bei Getrieben nimmt die Reibung zwischen den Kontaktflächen der beweglichen Partner hier das Aufbauteils und das Pfostenteils einen gro-ßen Einfluss auf die Leichtgängigkeit. Es besteht die Gefahr, dass sich bei zu großer Reibung zwischen dem Aufbauteil, dem Pfostenteil und oder der Verbindungsschraube das Aufbauteil mit dem Postenteil verklemmen oder durch weiter ansteigende Axialkraft über eine Hemmung keine Rotation zwischen dem Aufbauteil und dem Postenteil ergibt. Die Reibung zwischen den Kontaktstellen des Aufbauteils und des Pfostenteils hat somit einen großen Einfluss auf die Leichtgängigkeit und Zuverlässigkeit der Selbstzentrierung. Weiterhin hat auch die Reibung der Verbindungsschraube zu dem Pfostenteil (über das Gewinde) aber insbesondere die Reibung zwischen der Verbindungsschraube und dem Aufbauteil (über den Schraubensitz) einen großen Einfluss auf die Leichtgängigkeit der rotatorischen Selbstzentrierung.

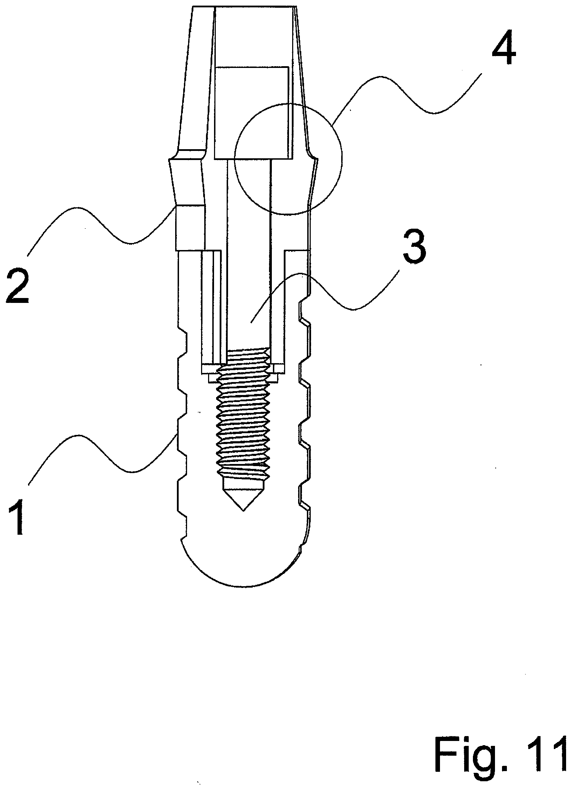

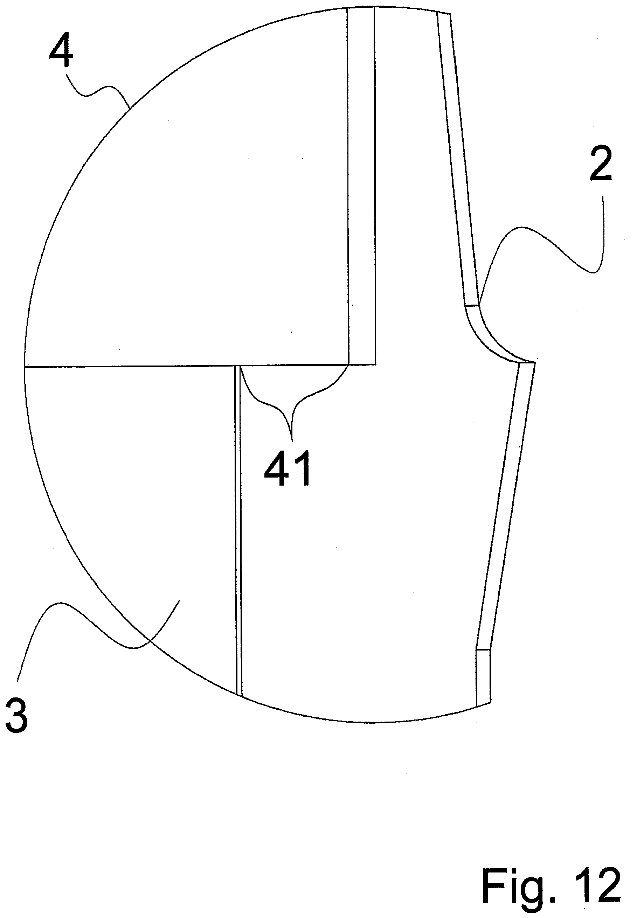

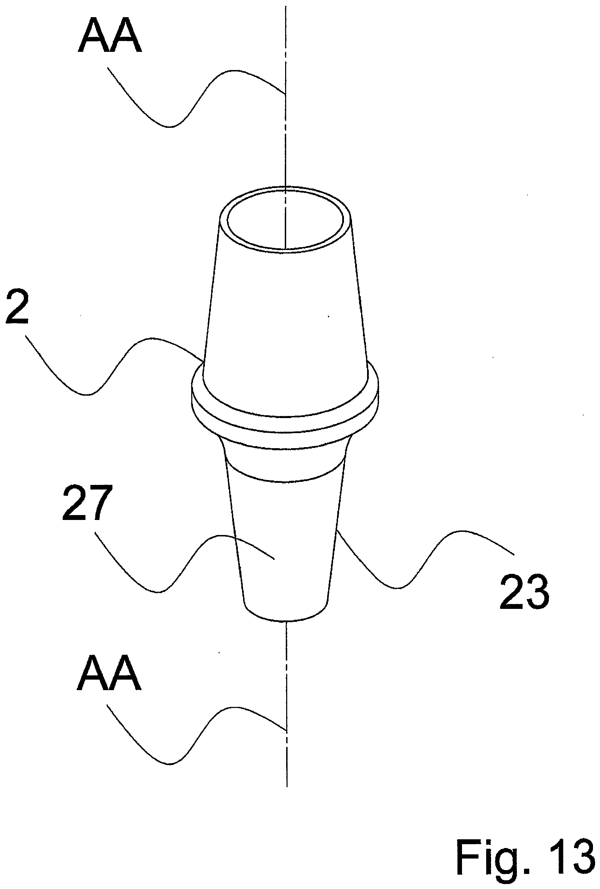

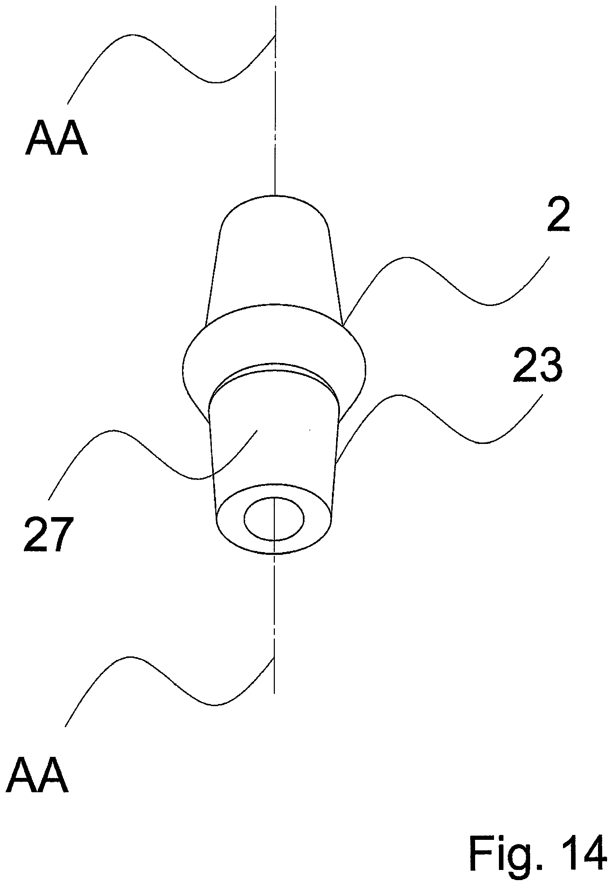

FIG. 11 zeigt ein im Schnittbild dargestelltes Pfostenteil 1 mit einem über die Verbindungsschraube 3 monierten und im Teilschnitt dargestellten Aufbauteil 2. der mit 4 gekennzeichnete Bereich zeigt den Schraubensitz im Aufbauteil 2. FIG. 12 zeigt die Vergrößerung des mit 4 in FIG. 11 gekennzeichneten Bereichs. der Schraubensitz 41 bildet die Kontaktfläche zwischen dem Aufbauteil 2 und der Verbindungsschraube 3. Diese Kontaktfläche (Schraubensitz) kann wie hier dargestellt plan sein, aber konisch geneigt oder gekrümmt ausgeführt sein. Die Verringerung der Haft- und Gleitreibung an den Kontaktflächen 41 unterstützt die Leichtgängigkeit bei der rotatorischen Selbstzentrierung deutlich.

Die Haft- und die Gleitreibung der folgenden Kontaktstellen haben einen Einfluss auf die Funktionalität der rotatorischen Selbstzentrierung.
1. Die Kontaktflächen der konischen Indizierung von Aufbauteil und Pfostenteil
2. Die Kontaktflächen zwischen der Verbindungsschraube und dem Aufbauteil. Das bedeutet der Schraubensitz in dem Aufbauteil und der Schraubensitz an dem Kopf der Verbindungsschraube

Die Beeinflussung der Gleit- und Haftreibungseigenschaften der unter 1. und 2. beschriebenen Flächen hat einen entscheidenden Einfluss auf die Funktionalität der rotatorischen Selbstzentrierung.

Das Einsetzen von Aufbauteilen im Patientenmund hat unterschiedliche Schwierigkeitsgrade. Wenn ein Aufbauteil im Frantzahnbereich eingesetzt werden soll ist dieser Bereich meist leicht zugänglich. Muss ein Aufbauteil allerdings im Seitenzahnbereich eingesetzt werden ist die schwieriger, da dieser Bereich schwer zugänglich ist und z. B. durch die Öffnungsfähigkeit des Mundes stärker beeinflusst wird als der Frontzahnbereich. Es kommt häufiger vor dass Aufbauteile eingesetzt werden und sich nicht beim ersten Versuch in der richtigen rotatorischen Position befinden. Auch kann es vorkommen, insbesondere bei konischen Verbindungstypen zwischen dem Aufbauteil und dem Pfostenteil, bei welchen apikal der Konusflächen eine Indizierung angebracht ist, dass die Verbindungsschraube im Pfostenteil greift obwohl die rotatorische Position nicht stimmt und bevor das Rotationsgesperre der Indizierung greift. Das bedeutet dass das Aufbauteil nicht in die Endposition eingebracht wurde (folglich zu hoch sitzt) und trotzdem die Verbindungsschraube montierbar ist. meist merkt der behandelnde Zahnarzt dies erst wenn er den Zahnersatz einprobieren möchte. Ein weiteres Problem ist, dass dabei Bereiche des Aufbauteils oder des Pfostenteil beschädigt werden können. Es wäre somit eine deutliche Optimierung wenn sich das Aufbauteil bezogen auf die rotatorische Ausrichtung selbstständig zentrieren würde sobald die Verbindungsschraube im Pfostenteil greift.

Die folgenden Oberflächenmodifikationen haben eine positive Wirkung auf die Leichtgängigkeit gezeigt. Das einfache Anodisieren (elektrochemische erzeugen einer Oxidschicht), eine Titannitrierung bzw. eine Titannitridbeschichtung, Chromnitrid, eine Anodisierung Typ II und eine DLC (Diamond like Carbon bzw. Diamon like Coating) Beschichtung (mono- und oder polykristalline Kohlenstoff-/Diamantbeschichtung). Mit diesen Verfahren konnte die Reibung zwischen den Verbindungspartner so stark reduziert werden (auch bei der Beschichtung von nicht allen Kontaktflächen), dass bei den verschiedenen Verbindungstypen mit der Verwendung der klinisch und mechanisch sinnvollen Parametern eine rotatorische Selbstzentrierung durch das Anziehen der Verbindungsschraube voll gegeben war.

Von großer Bedeutung ist, dass die Haft- und Reibungsmodifizierende Modifikation bzw. Beschichtung gewebeverträglich ist und zu keinen Reizungen des Hart- und oder Weichgewebes führt.

Den größten Einfluss hatten die Beschichtung der Kontaktflächen zwischen dem Aufbauteil und dem Pfostenteil und die Beschichtung von dem Schraubensitz im Aufbauteil und dem Schraubensitz an der Verbindungsschraube. Es konnte allerdings festgestellt werden, dass schon die Beschichtung von nur einer Fläche einen positiven Einfluss hat. Allein die Beschichtung des Schraubensitzes an der Verbindungsschraube oder der Kontaktfläche des Aufbauteils in Richtung dem Pfostenteil zeigte eine deutliche Verbesserung der Leichtgängigkeit.

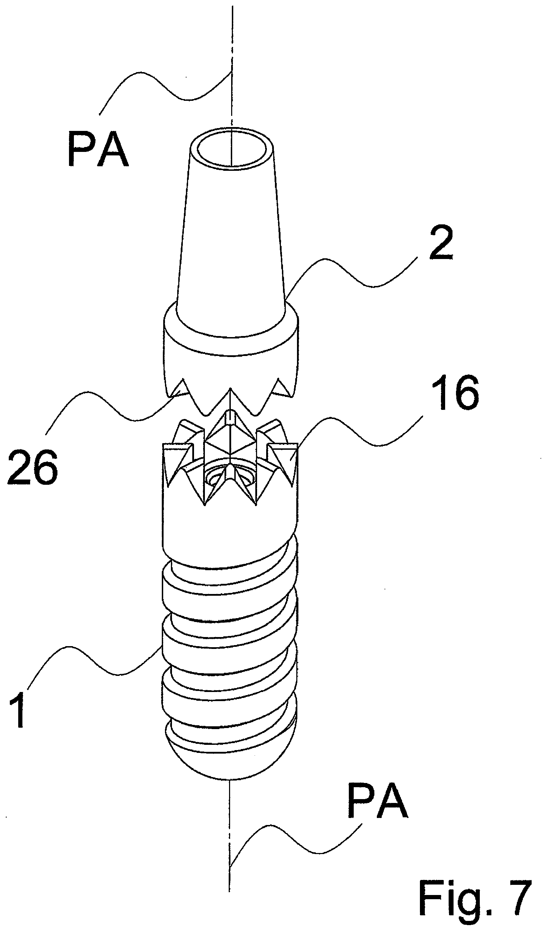

Versuche haben ergeben, dass die Reduzierung der Kontaktflächen der vorwiegend konisch gestalteten Funktionsflächen der Indizierung bei internen Verbindungen zwischen dem Pfostenteil und dem Aufbauteil zu einem außerordentlichen Erfolg geführt haben. Interne Verbindungen sind dadurch gekennzeichnet, dass sich in dem Pfostenteil eine Formausnehmung angebracht ist in welche ein am Aufbauteil angeformter Kontaktstift eingreift (FIG. 8 bis FIG. 9). Bei diesen Verbindungstypen werden die Konuswinkel meist deutlich kleiner gestaltet als bei den Verbindungstypen die auf den FIGs. 6 und 7 dargestellt sind. Bei den Verbindungstypen die auf den FIGs. 8 bis 10 dargestellt sind, ist die Verklemmung- bzw. Hemmungsgefahr vor dem endgültigen Sitz des Aufbauteils im Pfostenteil größer. Die Funktionalität konnte insbesondere bei den ovalen Konusverbindungen optimiert werde.

Vergleicht man nun die die gewünschten Eigenschaften von Indizierungen mit konischen Funktionsflächen und rotatorischer Selbstzentrierung bezogen auf die Insertion mit einem direkt in das Pfostenteil eingreifenden Eindrehwerkzeug und bezogen auf die Güte der Selbstzentrierung fällt auf dass die begünstigenden Gleit- und Haftreibungseigenschaften gegenläufig sind. Günstige Reibungseigenschaften wirken der Insertion mittels eines direkt in das Pfostenteil eingreifenden Eindrehwerkzeuges entgegen.

Der Erfindung liegt die Aufgabe zugrunde, diese Schwierigkeit zu überwinden.

Diese Aufgabe wird erfindungsgemäß gelöst, indem das rotatorische Gesperre mit der Funktion der Indizierung des Aufbauteils im ersten Implnatat-Teil oder Pfostenteil von der Funktion des Eindrehvorgangs separiert wird in dem unterhalb der Indizierung mit einer rotatorischen Selbstzentrierung eine weiter Indizierung in das Pfostenteil eingebracht wird, welche parallelwandig ist und bei rotatorischer Belastung keine abstoßende Kraft hervorruft. Diese zweite Indizierung wird lediglich zur Insertion des Pfostenteils in den Kieferknochen genutzt. Eventuell auftretende Beschädigungen wirken sich somit auch nicht auf die spätere Funktion zwischen Aufbauteil und Pfostenteil aus. Art und Geometrie des zusätzlichen rotatorischen Gesperres im Pfostenteil können vielfältig sein. In einer besonders vorteilhaften Ausführung ist die Anzahl der nutzbaren Positionen der zur Indizierung genutzten Formausnehmung identisch der möglichen rotatorischen Positionen in dem rotatorischen Gesperre welches für die Insertion genutzt wird. Der Vorteil besteht darin, dass der Behandler während der Insertion an dem Eindrehwerkzeug erkennen kann wo die Positionsmöglichkeiten eines Aufbauteils sind, wenn das Eindrehwerkzeug mit entsprechenden Markierungen versehen ist.

Je geringer die Anzahl der Positionsmöglichkeiten des Aufbauteils auf dem Postenteil, desto wichtiger ist es dass der behandelnde Zahnarzt weiß wie die Indizierung/das Rotationsgesperre im Kieferknochen ausgerichtet ist. Folglich ist es von großer Bedeutung dass die Anzahl der Positionsmöglichkeiten des Indexes mit den zur Pfostenteilachse bzw. Aufbauteilachse geneigten Funktionsflächen, der für die Aufbauteilindexierung dient und des Indexes welcher parallel zur Pfostenteilachse bzw. Aufbauteilachse ausgerichtete Funktionsflächen besitzt welche zum Einschrauben des Pfostenteils fungieren gleich ist. Auf diesem Wege ist es möglich an dem Eindrehinstrument und oder am Eindrehaufbauteil Markierungen anzubringen anhand dessen der Behandler erkennen kann wie die rotatorische Ausrichtung der Indexierung bzw. des rotatorischen Gesperres ist.

In einer besonders bevorzugten Ausführungsform ist ein Dentalimplantat 1 mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil vorgesehen, wobei die Implantat-Teile über einen an eines der Implantat-Teile angeformten, in einen im anderen Implantat-Teil vorgesehenen Aufnahmekanal einschiebbaren Verbindungszapfen mechanisch miteinander verbindbar sind, und wobei der Verbindungszapfen und daran angepasst der diesem zugeordnete Aufnahmekanal in einem Indizierungsbereich jeweils eine Anzahl von zur Längsachse des ersten Implantat-Teils geneigten Kontaktflächen aufweisen, wobei mindestens eine der Kontaktflächen an mindestens einem Implantat-Teil mit einer reibungsreduzierenden Beschichtung versehen ist.

Bei diesem Dentalimplantat sind besonders bevorzugt im Indizierungsbereich alle Kontaktflächen der Implantat-Teile mit einer reibungsreduzierenden Beschichtung versehen.

In weiterer bevorzugter Ausgestaltung des Dentalimplantats sind dessen Implantat-Teile über eine Verbindungsschraube mechanisch miteinander verbindbar, wobei der Schraubensitz der Verbindungsschraube im jeweiligen Implantat-Teil mit einer reibungsreduzierenden Beschichtung versehen ist.

Besonders bevorzugt ist weiterhin ein Dentalimplantat der genannten Bauweise, dessen Implantat-Teile im Verbindungsbereich einen zweiten Indizierungsbereich, vorzugsweise ein Rotationsgeperre, mit im wesentlichen parallel zur Längsachse des Verbindungszapfens ausgerichteten konischen Funktionsflächen aufweisen. Bei diesem Dentalimplantat sind besonders bevorzugt beide Indizierungsbereiche für die gleiche Anzahl von Positioniermöglichkeiten ausgelegt.

In einer weiteren vorteilhaften Ausgestaltung des Dentalimplantats besitzt die Querschnittsfläche der konischen oder sich verjüngenden ersten Indizierung zwischen den Implantat-Teilen eine ovale Fläche.

### Bezugszeichenliste

- 1: Pfostenteil/Dentalimplantat
- 11: Außengewinde auf dem Pfostenteil 1
- 12: Innengewinde im Pfostenteil 1
- 13: Formausnehmung im Pfostenteil 1
- 15: Dachfläche 1 auf dem Pfostenteil 1
- 155: Dachfläche 2 auf dem Pfostenteil 1
- 16: Verzahnungselement/Verzahnungsfläche auf dem Pfostenteil 1
- 17: Indizierende/sperrende Funktionsfläche in der Formaufnehmung 13 von dem Pfostenteil 1
- 2: Aufbauteil
- 21: Schraubenkanal im Aufbauteil 2
- 22: Anschlussstück am Aufbauteil 2 zur Befestigung eines Zahnersatzstückes
- 23: Kontaktstift am Aufbauteil 2
- 24: Schleimhautdurchtrittsbereich des Aufbauteils 2
- 25: Dachfläche 1 am Aufbauteil 2
- 255: Dachfläche 2 am Aufbauteil 2
- 26: Verzahnungselement/Verzahnungsfläche am Aufbauteil 2
- 27: Indizierende/sperrende Funktionsfläche am Aufbauteil 2
- 3: Verbindungsschraube zur Fixierung des Aufbauteils 2 auf dem Pfostenteil 1
- 4: Ausschnitt/Ausschnittsvergrößerung von dem Schraubensitz der Schraube 3 in dem Aufbauteil 2
- 41: Schraubensitz/Kontaktfläche zwischen der Verbindungsschraube 3 und dem Aufbauteil 2
- AA: Aufbauteilachse
- PA: Pfostenteilachse

## Patentansprüche

1. Zur Einbringung in einen Kieferknochen vorgesehenes Implantat-Teil (1) mit einem Aufnahmekanal (13), in den ein zugeordneter Verbindungszapfen (23) einschiebbar ist, wobei der Aufnahmekanal (13) in einem ersten Indizierungsbereich eine Mehrzahl von zur Längsachse des Implantat-Teils (1) geneigten Kontaktflächen (27) für den Verbindungszapfen (23) und einen zweiten Indizierungsbereich in Form eines Rotationsgeperres mit in Bezug zur Längsachse des Verbindungszapfens (23) parallelen Funktionsflächen aufweist, **dadurch gekennzeichnet, dass** der Aufnahmekanal (13) in seinem ersten Indizierungsbereich hinsichtlich seiner Verbindungsparameter für eine rotatorische Selbstzentrierung beim Einschieben des Verbindungszapfens (23) ausgelegt ist.

2. Zur Einbringung in einen Kieferknochen vorgesehenes Implantat-Teil (1) mit einem Aufnahmekanal (13), in den ein zugeordneter Verbindungszapfen (23) einschiebbar ist, wobei der Aufnahmekanal (13) in einem ersten Indizierungsbereich eine sich in Richtung zum apikalen Ende verjüngende Kontaktfläche mit nicht rundem Querschnitt für den Verbindungszapfen bildet, wobei der Aufnahmekanal (13) einen zweiten Indizierungsbereich in Form eines Rotationsgeperres mit in Bezug zur Längsachse des Verbindungszapfens (23) parallelen Funktionsflächen aufweist, **dadurch gekennzeichnet, dass** der Aufnahmekanal (13) in seinem ersten Indizierungsbereich hinsichtlich seiner Verbindungsparameter für eine rotatorische Selbstzentrierung beim Einschieben des Verbindungszapfens (23) ausgelegt ist.

3. Implantat-Teil (1) nach Anspruch 2, bei dem die Kontaktfläche im ersten Indizierungsbereich zur Längsachse des Implantat-Teils (1) geneigt und im Querschnitt oval ausgeführt ist.

4. Implantat-Teil (1) nach einem der Ansprüche 1 bis 3, bei dem beide Indizierungsbereiche für die gleiche Anzahl von Positioniermöglichkeiten ausgelegt sind.

5. Implantat-Teil (1) nach einem der Ansprüche 1 bis 4, bei dem im ersten Indizierungsbereich einige oder alle der Kontaktflächen des Implantat-Teils (1) mit einer reibungsreduzierenden Beschichtung versehen sind.

## Claims

1. Implant part (1) intended for introduction into a jaw bone, with a receiving channel (13) into which an assigned abutment (23) is insertable, wherein in a first indexing area, the receiving channel (13) has a plurality of contact surfaces (27) for the abutment (23) that are inclined with regard to the longitudinal axis of the implant part (1) and in a second indexing area, in the form of an anti-rotation lock, functional surfaces parallel in relation to the longitudinal axis of the abutment (23), **characterised in that** in its first indexing area, with regard to its connecting parameters, the receiving channel (13) is configured for rotational self-centring on insertion of the abutment (23).

2. Implant part (1) intended for introduction into a jaw bone, with a receiving channel (13), into which an assigned abutment (23) is insertable, wherein in a first indexing area, the receiving channel (13) forms a contact surface with a non-round cross-section for the abutment that narrows in the direction towards the apical end, wherein in a second indexing area, in the form of an anti-rotation lock, the receiving channel (13) has parallel functional surfaces in relation to the longitudinal axis of the abutment (23), **characterised in that** in its first indexing area, with regard to its connecting parameters, the receiving channel (13) is configured for rotational self-centring on insertion of the abutment (23).

3. Implant part (1) according to claim 2, in which the contact surface in the first indexing area is inclined with regard to the longitudinal axis of the implant part (1) and is oval in cross-section.

4. Implant part (1) according to claim 1 to 3 in which both indexing areas are designed for the same number of positioning possibilities.

5. Implant part (1) according to any one of claims 1 to 4, in which in the first indexing area, some or all of the contact surface of the implant part (1) are provided with a friction-reducing coating.

## Revendications

1. Pièce d'implant (1) destinée à être introduite dans un os de la mâchoire, comprenant un canal de réception (13) dans lequel un pivot de liaison (23) correspondant peut être inséré, dans laquelle le canal de réception (13) présente dans une première zone d'indexation, une pluralité de surfaces de contact (27) pour le pivot de liaison (23) inclinées vers l'axe longitudinal de la pièce d'implant (1) et une seconde zone d'indexation sous forme d'un blocage de rotation avec des surfaces fonctionnelles parallèles par rapport à l'axe longitudinal du pivot de liaison (23), **caractérisé en ce que** le canal de réception (13) est conçu dans sa première zone d'indexation, s'agissant de ses paramètres de liaison, pour un auto-centrage rotatif lors de l'insertion du pivot de liaison (23).

2. Pièce d'implant (1) destinée à être introduite dans un os de la mâchoire, comprenant un canal de réception (13) dans lequel un pivot de liaison (23) correspondant peut être inséré, dans laquelle le canal de réception (13) forme dans une première zone d'indexation, une surface de contact se rétrécissant en direction de l'extrémité apicale de section non ronde pour le pivot de liaison, dans laquelle le canal de réception (13) présente une seconde zone d'indexation sous forme d'un blocage de rotation avec des surfaces fonctionnelles parallèles par rapport à l'axe longitudinal du pivot de liaison (23), **caractérisé en ce que** le canal de réception (13) est conçu dans sa première zone d'indexation, s'agissant de ses paramètres de liaison, pour un auto-centrage rotatif lors de l'insertion du pivot de liaison (23).

3. Pièce d'implant (1) selon la revendication 2, dans laquelle la surface de contact dans la première zone d'indexation est conçue inclinée en direction de la pièce d'implant (1) et ovale en section.

4. Pièce d'implant (1) selon l'une des revendications 1 à 3, dans laquelle les deux zones d'indexation sont conçues pour le même nombre de possibilités de positionnement.

5. Pièce d'implant (1) selon l'une des revendications 1 à 4, dans laquelle, dans la première zone d'indexation, quelques-unes ou toutes les surfaces de contact de la pièce d'implant (1) sont dotées d'un revêtement réduisant le frottement.
